Europäisches Patentamt

European Patent Office

Office européen des brevets

(11) Publication number: **0 035 168**
**B2**

(12) **NEW EUROPEAN PATENT SPECIFICATION**

(45) Date of publication of the new patent specification: **08.08.90**

(21) Application number: **81101141.0**

(22) Date of filing: **18.02.81**

(51) Int. Cl.⁵: **B 32 B 21/08, B 27 D 1/00, B 32 B 31/20**

(54) **Process for forming a laminated plastic covering on a wooden panel.**

(30) Priority: **29.02.80 IT 2028180**

(43) Date of publication of application:
**09.09.81 Bulletin 81/36**

(45) Publication of the grant of the patent:
**04.06.86 Bulletin 86/23**

(45) Mention of the opposition decision:
**08.08.90 Bulletin 90/32**

(84) Designated Contracting States:
**AT BE CH DE FR GB LI LU NL SE**

(56) References cited:
**EP-A-0 045 883    DE-C-1 453 414**
**DE-A-2 426 518    FR-A-1 350 882**
**DE-A-2 523 907    US-A-3 476 828**
**DE-A-2 557 344    US-A-4 412 883**
**DE-B-1 210 551**

**The file contains technical information submitted after the application was filed and not included in this specification**

(73) Proprietor: **SALVARANI S.p.A.**
**I-43031 Baganzola (Parma) (IT)**

(72) Inventor: **Luppi, Franco**
**Via Kant 4**
**I-43100 Parma (IT)**

(74) Representative: **Faggioni, Giovanmaria, Dr.**
**Fumero-Studio Consulenza Brevetti**
**Widenmayerstrasse 4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for making a wooden panel covered by a laminate comprising plastic.

It is known that in the production of furniture and particularly kitchen furniture wide use is made of composite wooden panels of different nature, more commonly called "chipboard", which are covered with a laminate comprising plastic material.

Such laminated covering is designed:
— first of all, to protect the wooden panel, thanks to its surface characteristics of hardness and of resistance to abrasion, to heat and to chemical etching;
— secondly, to strengthen the panel, thanks to its excellent characteristics of mechanical resistance, which will thereby be conferred onto the panel itself once the laminate has been firmly associated thereto; and
— finally, to decorate the panel, in that the surface of the laminate may display different designs and colours, at choice.

According to a terminology widely used at present, the term "laminate" shall mean a semirigid flat sheet of a thickness usually between six tenths and twelve tenths of a millimeter, obtained by overlapping and flat hot-pressing a plurality of paper or wood-pulp sheets impregnated with synthetic resin. For instance, to obtain a laminate of seven tenths of a millimeter, one may use three sheets of paper of 160 g/m² impregnated with phenolic resin, plus a superficial sheet of paper of 80—120 g/m² impregnated with melamine resin, which also acts as decorative sheet, and if desired interpose a sheet of so-called "barrier paper" to prevent the primary colour of the first sheets from affecting the colouring of the decorative sheet.

As said, this plurality of sheet is flat hot-pressed in order to obtain a semirigid laminate, which is subsequently cut to size so as to be applied as a covering on all the faces of a panel meant to form part of a furniture piece.

Though this technique — now used since many years — is generally widespread, it is however not free from drawbacks. If one considers, for instance, a panel designed to form the door of a furniture piece, even supposing that it has the simplest configuration of a very flat right parallelepiped, it would still normally be necessary to:
— cut to size six pieces of laminate, two by two of equal size, in order to cover the six faces of the panel;
— cold-glue, or more often, hot-glue with adhesive six pieces individually, onto the six faces of the panel; and
— trim, after desiccation of the glueing, all the edges of the panel, taking into account, that it is practically impossible to cut the pieces of laminated plastic and glue them together with sufficient precision to avoid subsequent finishing operations.

Various systems have been studied in order to overcome the above drawbacks at least partly.

For example in the Italian Patent No. 803,400, of the same applicant it has been proposed to create premolded laminate elements of predetermined size and shape, with a technique such that — once they have been applied and glued for instance onto a panel forming the door of a cupboard — they come to form a continuous covering both of the main exposed face of said panel and of its two vertical sides adjacent to said face. The covering of the other major face was then obtained in the usual manner by means of sheet of laminate, while other types of finishings were applied on the other two horizontal sides, e.g. swages in form of a fillet or of a gripping handle.

This technique, though offering undoubted advantages, suffers nevertheless from evident limitations, especially due to the fact that it only very slightly reduces the problems connected with glueing.

Another known proposal is that of the so-called "postforming" technique. This consists in producing laminates comprising resin(s) through the usual flat hot-pressing method, but without carrying out thoroughly the polymerization, that is, the hardening of the resins which impregnate the wood-pulp papers. In this manner one obtains laminates which may — before subsequently glueing them onto the wooden panels — be hot-bent by means of special tools and be thus adapted to any curved surfaces of the panel. This technique is particularly used e.g. to form laminates apt to cover the front surface and the sides of panels whose vertical edges are arch-bevelled.

This technique suffers also from considerable limitations especially due to the fact that the laminate may be bent only within certain limits, and in particular without going below a bending radius of about 1 cm.

One should also mention — though not strictly inherent in the problem of the present invention — the technique of producing the so-called "ennobled" panels. This technique consists in carrying out the flat hot-pressing of large wooden chipboard panels, by previously applying on the two main faces of the panel a sheet of melaminic paper of 80/100 g/m². The large flat panels thereby obtained are then cut to size for different uses.

The production of such "ennobled" panels is known from US—A—3 476 828. Because of the low pressures it is only possible to have at maximum one craft paper sheet impregnated with phenol form aldehyde resin and a decorative cellulose paper impregnated with a special melaminic resin and pressing same at moderate pressures of about 16 kg/cm². These low pressures do not allow to produce a high resistant surface nor do they allow to shape a surface of the panel together with a laminate.

These panels are, however, seldom used, and in many cases they are used for furniture of inferior quality because both the overall mechanical resistance of the panel and its characteristics of surface resistance are very modest. It is for this reason that this technique is not considered as pertaining to the field of the present invention.

From FR—A—1 350 882 a method for producing coated panels is known in which the wooden panel itself is firstly imbued by a synthetic resin and afterwards laminates or simply decorative sheets are fixed onto it by hot-pressing.

The panels produced by this method have the serious drawback, that the wood, undergoing length variations during temperature changes or humidity changes causes cracks in the surface produced that way, because the polymerized resin having impregnated the wood is not elastic.

Therefore after a short period of time panels produced by this method do have cracks which give access of humidity to the wooden panel itself.

A still further method for producing panels having a coating formed of a sheet of synthetic material is described in the DE—B—1 210 551. According to this method, one starts however from a cold-preformed wooden shaving body, which is coated with the synthetic sheet, and pressed and moulded in its final shape in a single hot-pressing phase.

This method has first of all the drawback that, in pressing together the panel and its coating, the surface of this latter will never be perfectly flat and smooth. In actual fact, the material being pressed — formed of a mixture of resin and wooden shavings of different hardness — is not sufficiently homogeneous, whereby the panel surface will be slightly corrugated and/or humped, since the synthetic coating sheet adapts itself to the waviness and hump of the wooden shaving material of said panel.

The object of the present invention is actually to obtain wooden panels particularly suited for the production of furniture, having basically the same characteristics of the traditional panels covered with laminate, that is

— great structural stoutness, and

— excellent surface characteristics of resistance to abrasion, heat and corrosion in general;

but being furthermore able

— to preserve these characteristics longer in time, without having to suffer from any faults or ageing of the glueing;

— to acquire different shapes, other than the simple right parallelepipedon, which had never been obtained so far; and

— to be besides produced by a simpler and quicker method than heretofore.

This object is reached with the process for forming a laminated coating on a wooden panel by applying at least one resin-impregnated paper or wood-pulp sheet and one resin-impregnated decorative sheet to the panel and thereafter hot-pressing the sheets to the panel so that polymerisation of the resin occurs in situ on the panel according to the present invention, which is essentially characterised in that the panel is placed in a mould having a static lower part which co-operates with the lower surface of the panel, and a shaped movable upper part having at least a portion not parallel to the lower surface of the panel which cooperates with at least the upper surface of the panel, and in that the impregnated sheets are applied to at least the upper surface of the panel and the upper part of the mould is then pressed into contact with the cooperating surface(s) so that the panel is partially compressed, and the laminated coating is formed according to the shape of the mould, the panel itself acting as one part of the mould.

Further characteristics and advantages of the process according to the present invention will be evident from the following description of some embodiments thereof, given by mere way of example and illustrated in the accompanying drawing, in which:

Figures 1 and 3 show a schematic cross section view of two types of wooden panels, ready to be mould-pressed with the process according to the invention; and

Figures 2 and 4 show the same panels of Figures 1 and 3 respectively, in the mould-pressing phase.

As shown, onto a mould part 1, which in this case is a flat part, is rested the wooden panel 2, the upper face of which is shaped with a profile having also some sharp edges.

Several sheets 3 of paper, impregnated with synthetic resin, are laid onto this upper face. The choice and number of these sheets is determined in the usual manner, adapted for the production of laminated plastic. For instance, it will be possible to lay one upon the other 2—3 sheets of phenolic paper of 150 g/sqm, and one sheet of melaminic paper of 120 g/sqm having a decorative function, as well as possibly a barrier paper.

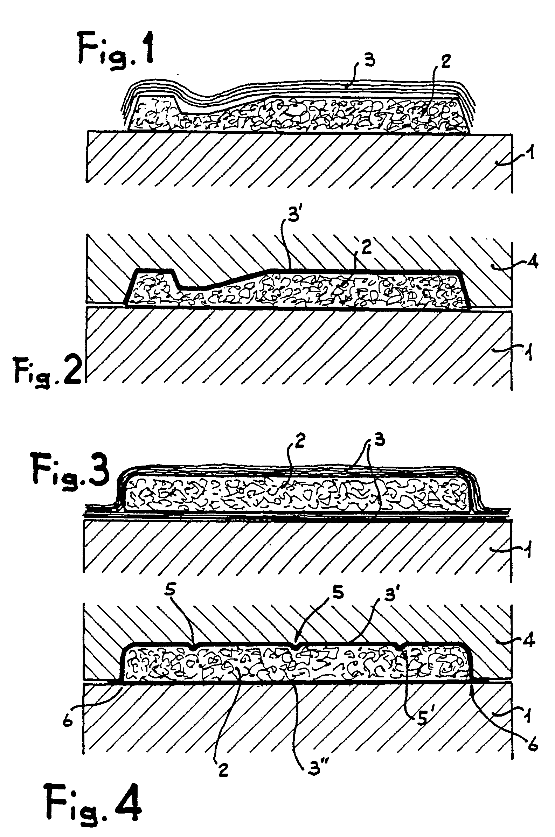

The mould part 4 (Figure 2) is then moved down onto this plurality of paper sheets, its moulding surface corresponding to the upper face of the panel 2. The paper sheets 3 are thus practically moulded between two half-moulds consisting, on one side, of the mould part 4 and, on the other side, of the panel 2 itself. The following essential advantages result therefrom:

— on one hand, a perfect shaping, also with sharp edges — as it had never been possible to obtain so far — of the laminate 3' formed by the group of sheets 3;

— on the other hand, an exact mating of the laminate 3' with the profile of the panel 2, without the need for any further finishing operations; and

— finally, a perfect and lasting adherence of the laminate 3' to the panel, thanks to the fact that the resins with which the sheets 3 are impregnated polymerize directly onto the face of the panel 2.

Figures 3 and 4 show the production of another type of panel and place in evidence some further advantages of the invention.

First of all, the laminate is formed on the upper face as well as on the lower face of the panel 2. To this end, it is sufficient to place a number of paper sheets onto the mould part 1, to subsequently place thereon the panel 2, and to finally lay thereupon a further number of paper sheets 3. When pressing is carried out, a first sheet of laminated plastic 3' is formed between the two half-moulds consisting of the mould part 4 and of the panel 2, and another sheet of laminated plastic 3'' is formed between the two half-moulds consisting of the same panel 2 and of the mould part 1.

Figures 3 and 4 place in evidence also a further characteristic of the invention. In Figure 3 it can in fact be seen that, before moulding, the upper surface of the panel 2 is flat. However, the mould part 4 comprises a series of parallel ribs 5, running along an alignment perpendicular to the drawing sheet. The effect of these ribs is to cause a marked compression of the panel 2, in correspondence of said ribs, and thus the forming of grooves 5' into which gets moulded also the laminated plastic 3'.

The grooves 5' produce a panel — if the decorative surface of the laminate 3' imitates the natural grain of wood — which looks as if it were formed by fillets arranged side by side, similar to "matchboards".

Further types of effects may easily be imagined. It will simply be necessary, in forming the ribs 5 or other similar reliefs, to make sure that these reliefs are not too marked, so as not to cause the tearing or cutting of the sheets 3 during pressing.

A further advantage of greatest importance — which appears evident in Figure 4 — is that, in the area of the edges 6, namely in correspondence of the connection point between the laminate 3', formed on the upper face of the panel, and the laminate 3'', formed on its lower face, one obtains — thanks to the polymerization of the two laminates, one in contact with the other — a perfect sealing, lasting with time. The final result is thus equal to that of a laminated plastic surrounding completely the panel 2, without any gaps, and this result is of utmost importance for the life of the panel and for its resistance to ageing and to humidity.

The additional finishing operations onto a panel thus formed, will hence be confined to the mere trimming in correspondence of the edges 6. Even this operation may however be eliminated if the mould parts 1 and 4 are shaped, in correspondence of said edges 6, so as to additionally operate a clear cutting of the sheets 3 of treated paper.

**Claims**

1. A process for forming a laminated coating on a wooden panel by applying at least one resin-impregnated paper or wood-pulp sheet and one resin-impregnated decorative sheet to the panel and thereafter hot-pressing the sheets to the panel so that polymerisation of the resin occurs *in situ* on the panel, characterized in that the panel is placed in a mould having a static lower part which co-operates with the lower surface of the panel, and a shaped movable upper part having at least a portion not parallel to the lower surface of the panel which co-operates with at least the upper surface of the panel, and in that the impregnated sheets are applied to at least the upper surface of the panel and the upper part of the mould is then pressed into contact with the cooperating surface(s) so that the panel is partially compressed, and the laminated coating is formed according to the shape of the mould, the panel itself acting as one part of the mould.

2. Process according to claim 1, characterized in that the impregnated paper and wood-pulp sheets (3) are only applied on the upper surface of the panel (2) extending over the edges thereof, to form a panel having an uncoated surface.

3. Process according to one of the preceding claims, characterized in that the surfaces of the panel (2) are shaped, before putting the panel into the mould, according to a shape corresponding to the shape of the mould parts (1, 4).

4. A process according to claim 1, characterized in that the surface of the panel is originally flat, that this surface is covered by a plurality of resin-impregnated sheets (3) and in that the surfaces of the laminate (3) and the panel (2) are formed together during molding according to the shape of the mould parts(s) (1, 4).

**Patentansprüche**

1. Verfahren zur Herstellung eines Schichtüberzugs auf einer Holzplatte durch Aufbringen mindestens einer harzgetränkten Papier- oder Zellstofflage und einer harzgetränkten Dekorationsfolie auf die Platte und anschließendes Heißpressen der Lagen auf der Platte, so daß *in situ* auf der Platte die Polymerisation des Harzes stattfindet, dadurch gekennzeichnet, daß die Platte in eine Preßform gelegt wird, die ein statisches unteres Teil aufweist, das mit der Unterseite der Platte zusammenwirkt, und ein geformtes, bewegliches oberes Teil mit mindestens einem zur Unterseite der Platte nicht parallelen Bereich, das mindestens mit der Oberseite der Platte zusammenwirkt, und daß die getränkten Lagen mindestens auf die Oberseite der Platte aufgebracht werden und das obere Teil der Preßform dann in Kontakt mit der (den) zusammenwirkenden Oberfläch(n) gepreßt wird, so daß die Platte teilweise zusammengedrückt wird, und der Schichtüberzug entsprechend der Gestalt der Preßform ausgebildet wird, wobei die Platte selbst als ein Teil der Pressform wirkt.

2. Verfahren nach Anspruch 1, dadurch gekennzeichnet, daß die getränkten Papier- und Zellstofflagen (3) nur auf die Oberseite der Platte (2) aufgebracht werden, wobei sie sich über deren Kanten erstrecken, um eine Platte mit einer unbeschichteten Oberfläche herzustellen.

3. Verfahren nach einem der vorangehenden Ansprüche, dadurch gekennzeichnet, daß die Oberflächen der Platte (2) gemäß einer Gestalt, die der Gestalt der Formteile (1, 4) entspricht, geformt werden, bevor die Platte in die Preßform gelegt wird.

4. Verfahren nach Anpruch 1, dadurch gekennzeichnet, daß die Oberfläche der Platte ursprünglich eben ist, daß diese Oberfläche mit einer Vielzahl von harzgetränkten Lagen (3) überschichet wird, und daß die Oberflächen des Laminats (3) und der Platte (2) während des Formpressens entsprechend der Gestalt des Formteiles (der Formteile) (1, 4) zusammen hergestellt werden.

**Revendications**

1. Procédé pour former un revêtement lamifié sur un panneau de bois par application sur ce panneau d'au moins une feuille de papier ou de pulpe de bois imprégné de résine et d'une feuille décorative imprégnée de résine, et subséquente compression à chaud des feuilles sur le panneau de manière que la polymérisation de la résine se produise *in situ* sur le panneau, caractérisé par le fait qu'on place la panneau dans un moule ayant une partie inférieure statique qui coopère avec la surface inférieure du panneau, et une partie supérieure conformée, mobile, ayant au moins une partie non parallèle à la surface inférieure du panneau et qui coopére avec au moins la surface supérieure du panneau, et par le fait qu'on applique les feuilles imprégnées sur au moins la surface supérieure du panneau et on presse ensuite la partie supérieure du moule en contact avec la (les) surface(s) coopérante(s) de manière à comprimer partiellement le panneau et à conformer le revêtement lamifié selon la forme du moule, le même panneau agissant comme une partie du moule.

2. Procédé selon la revendication 1, caractérisé par le fait que les feuilles (3) de papier et de pulpe de bois imprégné sontg appliquées uniquement sur la surface supérieure du panneau (2) s'étendant jusqu'à ses bords pour former un panneau ayant une surface non revêtue.

3. Procédé selon l'une quelconque des revendications précédentes, caractérisé par le fait que les surfaces du panneau (2) sont conformées, avant de mettre le panneau dans le moule, selon une forme correspondant à la forme des parties (1, 4) de moule.

4. Procédé selon la revendication 1, caractérisé par le fait que la surface du panneau est initialement plane, qu'on couvre cette surface par une pluralité de feuilles (3) imprégnées de résine et qu'on forme ensemble les surfaces du lamifiée (3) et du panneau (2) pendant le moulage selon la forme des parties (1, 4) de moule.

Fig.1

Fig.2

Fig.3

Fig.4